# EUROPÄISCHE PATENTSCHRIFT

(11) **EP 2 454 947 B1**
(45) Veröffentlichungstag und Bekanntmachung des Hinweises auf die Patenterteilung: **23.03.2016**
(21) Anmeldenummer: 11009248.3
(22) Anmeldetag: 22.11.2011
(51) Int. Cl.: A23L 5/10, A23L 19/00, A23L 2/02

(54) **Verfahren zur Herstellung eines gekochten Produkts**
Method for manufacturing a cooked product
Procédé de fabrication d'un produit cuit

(30) Priorität: 23.11.2010 DE 102010052050
(43) Veröffentlichungstag der Anmeldung: 23.05.2012
(73) Patentinhaber: Hipp & Co, 6072 Sachseln (CH)
(72) Erfinder: Linder, Hans, 85276 Pfaffenhofen (DE); Rahm, Stefan, 85356 Freising (DE); Schlemmer, Wilhelm, 85276 Affalterbach (DE)
(74) Vertreter: Castell, Klaus

(56) Entgegenhaltungen:
- EP-A1- 2 036 447
- US-A- 2 237 739
- US-A- 2 403 871
- US-A- 2 912 330
- US-A- 4 273 792

## Beschreibung

Die Erfindung betrifft ein Verfahren zur Herstellung eines gekochten Produktes aus einem Gemüse, bei dem dem Gemüse Dampf zugegeben wird, um es auf 95 bis 125 °C zu erhitzen, das erhitzte Produkt eine Heißhaltezeit von 0,2 bis 5 min auf dieser Temperatur gehalten wird und abgekühlt wird, wobei Erhitzung, Heißhaltevorgang und Abkühlung in einem kontinuierlichen Prozess durchgeführt werden.

Gattungsgemäße Verfahren sind aus der US 2912330 A, der EP 2036447 A1 und der US 2403871 A bekannt.

Beispielsweise zur Herstellung eines Gemüsemuses wurden bisher beispielsweise kalte Karottenwürfel nach einer Vorzerkleinerung in einem Fleischwolf in großen Kochschnecken langsam etwa 30 min lang mit Direktdampf auf 95 °C erhitzt und anschließend in zwei Stufen mittels einem Durchlaufkutter und gegebenenfalls auch einer Mühle feinstzerkleinert.Dabei hat sich herausgestellt, dass das Karottenmus sehr glatt war und etwas bitter im Geschmack.

Der Erfindung liegt daher die Aufgabe zu Grunde, ein Verfahren zur Herstellung eines gekochten Gemüses bereitzustellen, das zu optimalen Produkteigenschaften führt.

Diese Aufgabe wird mit einem gattungsgemäßen Verfahren gelöst, bei dem das erhitzte Produkt in einem Röhrenwärmetauscher auf 80 bis 90 °C abgekühlt wird.

Bei Einhaltung dieser Prozessparameter hat sich herausgestellt, dass beispielsweise das Karottenmus nicht mehr bitter und sehr mild und frisch im Geschmack ist. Auch die Struktur wurde wesentlich verbessert, sodass das Produkt wie hausgemacht schmeckt.

Vorteilhaft ist es, wenn das Gemüse vor der Dampfzugabe vorzerkleinert wird. Dies erleichtert eine gleichmäßige Erhitzung.

Bei Versuchen hat sich herausgestellt, dass optimale Produkteigenschaften zu erzielen sind, wenn das Gemüse während der Heißhaltezeit auf 110 bis 120 °C, vorzugsweise etwa 115 °C, gehalten wird.

Das Verfahren kann dadurch beschleunigt werden, dass das Gemüse während des Erhitzens gemischt und zerkleinert wird.

Eine hohe Energieeinsparung und gute geschmackliche Ergebnisse wurden dadurch erzielt, dass die Heißhaltezeit 0,5 bis 3,0 min, vorzugsweise etwa 1,5 min, beträgt.

Es hat sich herausgestellt, dass mindestens 80 % des zugegebenen Dampfes, vorzugsweise mehr als 90 bis 95 %, zur Erhitzung des Gemüses genutzt werden können. Dadurch wird viel Energie in Form von Dampf eingespart, da weniger überschüssiger Dampf als bei üblichen Kochschnecken nach außen gelangt und somit der Dampf optimal genutzt wird.

Die Reaktionen des erhitzten Produkts wird in einem definierten Zeitrahmen gehalten, indem das erhitzte Produkt auf 80 bis 90 °C abgekühlt wird.

Diese Abkühlung erfolgt in einem Röhrenwärmetauscher.

Je nach geforderten Produkteigenschaften kann auf die Abkühlung eine Feinstzerkleinerung in einem Rotor-Stator-System oder einer Mühle folgen. Dadurch wird es möglich, ein geschmacklich hervorragendes Mus herzustellen.

Der Schwerpunkt des Einsatzes liegt auf dem Bereich der der Herstellung von Mus aus Gemüse.

Eine besonders bevorzugte Anwendung des erfindungsgemäßen Verfahrens liegt in der Verwendung eines Karottenprodukts als Rohstoff.

Das gekochte Produkt kann noch stückig sein oder es wird als Mus weiterverarbeitet. Ein breites Anwendungsgebiet erschließt sich, wenn das gekochte Produkt ein Saft ist. Dabei wird vorzugsweise grobes Mus der Saftherstellung zugeführt.

Ein erstes Ausführungsbeispiel betrifft die Herstellung von Karottenmus. Dabei werden die folgenden Verfahrensschritte nacheinander durchgeführt:

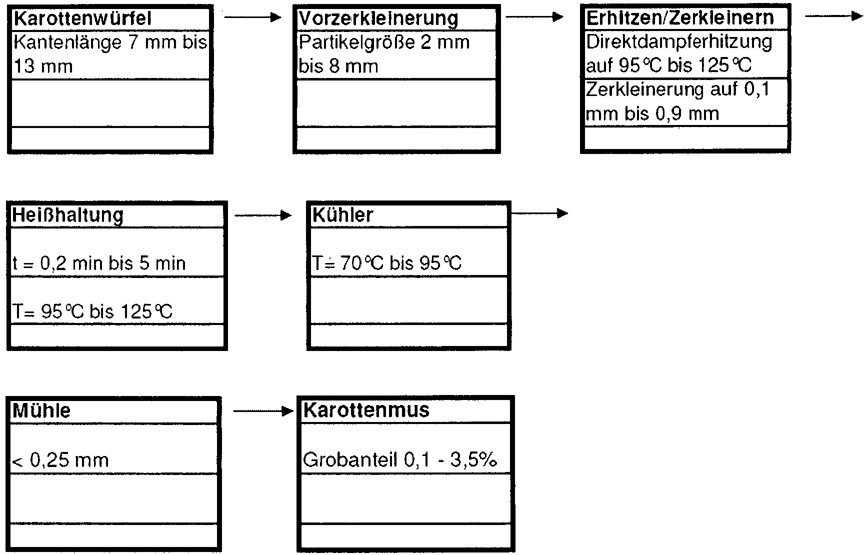

Ein weiteres Ausführungsbeispiel betrifft die Herstellung von Karottensaft:

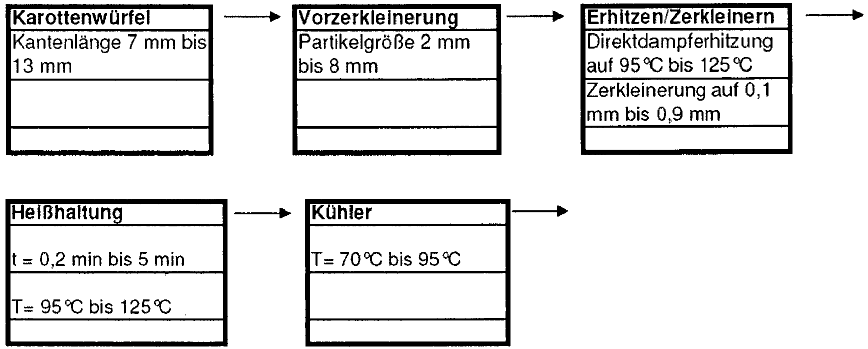

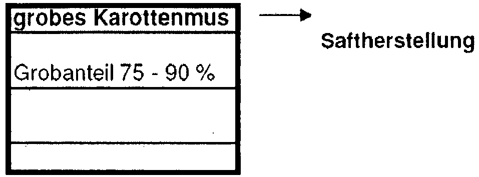

Zur Herstellung eines Pastinakenmuses werden die folgenden Verfahrensschritte angewendet:

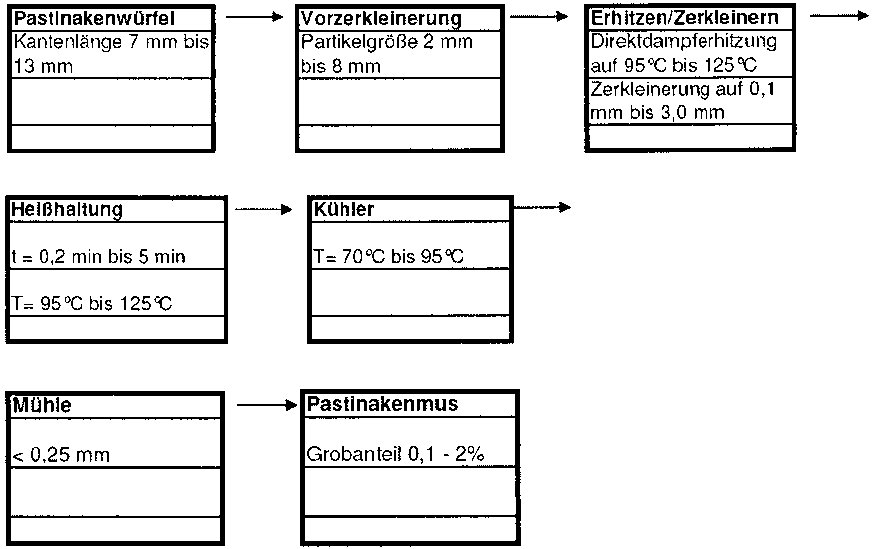

Ein weiteres Ausführungsbeispiel betrifft die Herstellung von Kürbismus. Hierbei werden die folgenden Verfahrensschritte angewendet:

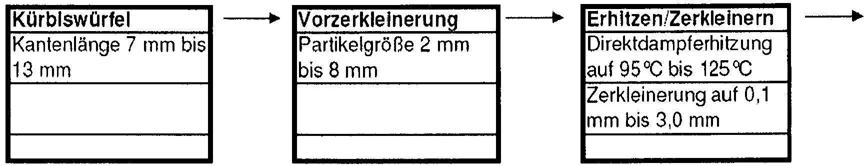

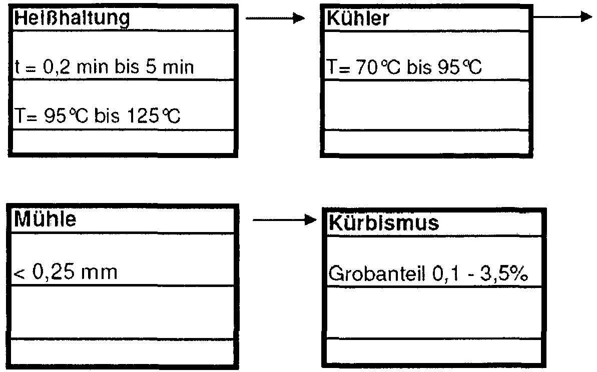

Zur Bestimmung des Grobanteils wird zunächst ein Siebzylinder mit 0,5 mm Maschenweite verwendet. Das Leergewicht des Siebzylinders wird bestimmt und anschließend werden 100 g Produkt mit einem Messbecher eingewogen. Der Inhalt des Messbechers wird dreimal mit jeweils ca. 200 ml 40 bis 50 °C warmes Wasser in den Siebzylinder überführt. Produktreste an der Siebzylinderinnenwand werden mit warmem Wasser abgespült. Das gesamte warme Wasser wird in einer Schüssel aufgefangen. Der Siebzylinder wird im warmem Wasser mehrmals auf- und abgeschwenkt. Danach wird das Wasser in der Schüssel durch neues, warmes Wasser ersetzt. Der Siebzylinder wird nun noch einmal mehrmals auf- und abgeschwenkt. Wenn das Wasser in der Schüssel klar bleibt, dann ist das Auswaschen des Grobanteils beendet, ansonsten muss das Auswaschen fortgeführt werden. Danach werden Flüssigkeitstropfen an der Zylinderwand innen und außen sowie am Boden mit einem Tuch abgetrocknet. Letztlich wird das Gewicht des Siebzylinders mit Inhalt bestimmt. Der Grobanteil in Prozent ist dann das Gewicht von Siebzylinder mit Inhalt, verringert um das Leergewicht des Siebzylinders bei vermahlenen Produkten.

## Patentansprüche

1. Verfahren zur Herstellung eines gekochten Produkts aus einem Gemüse, bei dem dem Gemüse Dampf zugegeben wird, um es auf 95 bis 125 °C zu erhitzen, das erhitzte Produkt eine Heißhaltezeit von 0,2 bis 5 min auf dieser Temperatur gehalten wird und abgekühlt wird, wobei Erhitzung, Heißhaltevorgang und Abkühlung in einem kontinuierlichen Prozess durchgeführt werden, ***dadurch gekennzeichnet, dass*** das erhitzte Produkt in einem Röhrenwärmetauscher auf 80 bis 90 °C abgekühlt wird..

2. Verfahren nach Anspruch 1, ***dadurch gekennzeichnet, dass*** das Gemüse vor der Dampfzugabe vorzerkleinert wird.

3. Verfahren nach einem der vorhergehenden Ansprüche, **dadurch *gekennzeichnet, dass*** das Gemüse während der Heißhaltezeit auf 110 bis 120 °C, vorzugsweise etwa 115 °C, gehalten wird.

4. Verfahren nach einem der vorhergehenden Ansprüche, ***dadurch gekennzeichnet, dass*** das Gemüse während des Erhitzens gemischt und zerkleinert wird.

5. Verfahren nach einem der vorhergehenden Ansprüche, ***dadurch gekennzeichnet, dass*** die Heißhaltezeit 0,5 bis 3,0 min, vorzugsweise etwa 1,5 min, beträgt.

6. Verfahren nach einem der vorhergehenden Ansprüche, ***dadurch gekennzeichnet, dass*** mindestens 80 % des zugegebenen Dampfes vorzugsweise mehr als 90 bis 95 % zur Erhitzung des Gemüses genutzt werden.

7. Verfahren nach einem der vorhergehenden Ansprüche, ***dadurch gekennzeichnet, dass*** auf die Abkühlung eine Feinstzerkleinerung in einem Rotor-Stator-System oder einer Mühle folgt.

8. Verfahren nach einem der vorhergehenden Ansprüche, ***dadurch gekennzeichnet, dass*** das Gemüse ein Karottenprodukt ist.

9. Verfahren nach einem der vorhergehenden Ansprüche, ***dadurch gekennzeichnet, dass*** das gekochte Produkt ein Saft ist.

## Claims

1. A method for manufacturing a cooked product from a vegetable, in which steam is supplied to the vegetable in order to heat it up to 95 to 125 °C, the heated product is kept at this temperature for a heat holding time of 0.2 to 5 minutes and then cooled down, wherein the heating, the heat holding process and the cooling are carried out in a continuous process, ***characterized in that*** the heated product is cooled down to 80 to 90 °C in a tubular heat exchanger.

2. The method according to claim 1, ***characterized in that*** the vegetable is preminced before the steam is supplied.

3. The method according to any one of the previous claims, ***characterized in that*** the vegetable during is held at 110 to 120 °C, preferably approximately 115 °C, during the heat holding time.

4. The method according to any one of the previous claims, ***characterized in that*** the vegetable is mixed and minced while it is heated.

5. The method according to any one of the previous claims, ***characterized in that*** the heat holding time is set at 0.5 to 3.0 minutes, preferably approximately 1.5 min.

6. The method according to any one of the previous claims, ***characterized in that*** at least 80 % of the steam supplied, preferably more than 90 to 95 %, is used for heating the vegetable.

7. The method according to any one of the previous claims, ***characterized in that*** the cooling process is followed by an ultra-fine milling process in a rotor-stator system or a mill.

8. The method according to any one of the previous claims, ***characterized in that*** the vegetable is a carrot-based product.

9. The method according to any one of the previous claims, ***characterized in that*** the cooked product is a juice.

## Revendications

1. Procédé de fabrication d'un produit cuit composé d'un légume, lors duquel on ajoute au légume de la vapeur, pour l'échauffer à de 95 à 125 °C, on maintient le produit à cette température pendant un temps de maintien au chaud de 0,2 à 5 minutes et on le refroidit, l'échauffement, le processus de maintien au chaud et le refroidissement étant réalisés au cours d'un processus continu, ***caractérisé en ce qu'** on* refroidit le produit chauffé dans un échangeur thermique tubulaire à de 80 à 90 °C.

2. Procédé selon la revendication 1, ***caractérisé en ce qu'**on* préfractionne le légume avant l'ajout de vapeur.

3. Procédé selon l'une quelconque des revendications précédentes, ***caractérisé en ce que*** pendant le temps de maintien au chaud, on maintient le produit à de 110 à 120 °C, de préférence à environ 115 °C.

4. Procédé selon l'une quelconque des revendications précédentes, ***caractérisé en ce qu'**on* mélange et on fractionne le légume pendant l'échauffement.

5. Procédé selon l'une quelconque des revendications précédentes, ***caractérisé en ce que*** le temps de maintien au chaud est de 0,5 à 3,0 mn, de préférence d'environ 1,5 mn.

6. Procédé selon l'une quelconque des revendications précédentes, ***caractérisé en ce qu'**on* utilise au moins 80 % de la vapeur ajoutée, de préférence plus de 90 à 95 % pour échauffer le légume.

7. Procédé selon l'une quelconque des revendications précédentes, ***caractérisé en ce que*** le refroidissement est suivi d'un fractionnement très fin dans un système de rotor-stator.

8. Procédé selon l'une quelconque des revendications précédentes, ***caractérisé en ce que*** le légume est un produit à base de carottes.

9. Procédé selon l'une quelconque des revendications précédentes, ***caractérisé en ce que*** le produit cuit est un jus.
